# EUROPEAN PATENT APPLICATION

(11) **EP 1 788 541 A1**
(43) Date of publication of application: **23.05.2007**
(21) Application number: 05778481.1
(22) Date of filing: 06.09.2005
(51) Int. Cl.: G09B 29/00, G06F 17/30, G06T 17/50

(54) **3D MAP DISTRIBUTION SERVER DEVICE, CLIENT TERMINAL DEVICE, AND 3D MAP DISTRIBUTION SYSTEM**

(30) Priority: 07.09.2004 JP 2004259437
(71) Applicant: CAD Center Corporation, Tokyo 112-0004 (JP)
(72) Inventor: TAKASE, Hiroshi c/o CAD CENTER CORP., Tokyo 112-004 (JP); SONE, Atsushi c/o CAD CENTER CORP., Tokyo 112-0004 (JP); HATANAKA, Tatsuya c/o CAD CENTER CORP., Tokyo 112-0004 (JP); SHIROKI, Mamoru c/o CAD CENTER CORP., Tokyo 112-0004 (JP); MASUMI, Takamitsu c/o CAD CENTER CORP., Tokyo 112-0004 (JP)
(74) Representative: Schäfer, Matthias W.
(86) International application number: PCT/JP2005/016290
(87) International publication number: WO 2006/028067

(57) **Abstract**

A three-dimensional map distribution server device 1 stores shape data for a plurality of structures drawn on a ground to generate a three-dimensional map image, and, in the first place, transmits to a client PC 4 a list which includes shape data for a plurality of structures in a district and has position information of the district or of the structures. The client PC 4 selects shape data required for the display based on the position information in the list, and transmits a transmission request for the selected shape data to the three-dimensional map distribution server device 1. When receiving the request, the three-dimensional map distribution server device 1 responds and transmits to the client PC 4 the requested shape data.

## Description

### Technical Field

The present invention relates to a three-dimensional-map distribution server device, a client terminal device, and a three-dimensional-map distribution system.

### Background Art

A patent document 1 has disclosed a computer network system. The computer network system has a configuration in which an information gathering computer and a first information providing computer are connected to form a network. The first information providing computer transmits a file-structure display data showing a tree structure of map data, wherein the structure is formed with a plurality of individual maps (two-dimensional map data), to the information gathering computer.
The information gathering computer displays the tree structure of map data, requests to the first information providing computer for individual maps in a display range specified by a rectangular shape, and displays individual maps received on the basis of the request. Moreover, the first information providing computer transmits the file-structure display data showing a tree structure of location data to the information gathering computer, and the information gathering computer receives the location data, which has been selected from the tree structure, from the first information providing computer, and then displays it.

Moreover, the patent document 1 suggests that the above-described computer network systemmay be similarly applied to the three-dimensional map data.

Patent Document 1: Japanese Patent Application Laid-Open No. 2000-155763 (embodiments of the invention, and the like).

### Disclosure of the Invention

### Subject to be solved by the Invention

Incidentally, a three-dimensional map image means a map image obtained by viewing a certain region from an eyepoint at an arbitrary position with a field of view in an arbitrary direction. Accordingly, the map image of patent document 1 may be called a kind of three-dimensional map image, even if it is a two-dimensional map data in a planar state from an eyepoint at a certain position in a certain viewing direction.

However, as described above, when generating a three-dimensional map image seen from the eyepoint at an arbitrary position by using the two-dimensional map data, the two-dimensional map data is required to be a high resolution data enough to interpret and identify each region when it is looked down directly from the eyepoint.

Especially, in a case when using a high-resolution two-dimensional map data and generating a three-dimensional map image in a distant view from an eyepoint, data amount of the map data of the viewing region in the range of the view become very large. Thereby, when the map data is transmitted from a server device to a client terminal device through a network, it takes a very long time to transmit the map data.

An object of the present invention is to provide a three-dimensional-map distribution server device, a client terminal device, and a three-dimensional map distribution system, by which data for generating a three-dimensional map image are transmitted efficiently through a network.

### Means for solving the subject

A three-dimensional-map distribution server device according to the present invention includes: a storage unit which stores a plurality of structure shape data drawn on a ground to generate a three-dimensional map image; a server communication unit connected to a network; a list transmitting unit which transmits through the server communication unit a list, which includs a plurality of structure shape data within a district and position information of the district or of the structures; and a data transmitting unit which, when the server communication unit receives a transmission request for the structure shape data selected based on the position information in the list, transmits requested structure shape data in the storage unit through the server communication unit.

When the above configuration is adopted, the three-dimensional-map distribution server device, in the first place, transmits the list of the structure shape data to the client terminal device connected to the network, and then, transmits the structure shape data which is selected from the list, based on position information thereto. Accordingly, the three-dimensional-map distribution server device does not transmit the structure shape data which is decided not to be required for generation of the three-dimensional image, and the data required for generating the three-dimensional map image may be transmitted to the client terminal device efficiently. Thereby, the three-dimensional map image is immediately displayed on the client terminal device, and when the eyepoint and the like are moved, the displayed three-dimensional map image is smoothly changed.

In addition to the configuration according to the above-described invention, the three-dimensional-map distribution server device according to the present invention has a configuration in which the storage unit which stores the plurality of structure shape data in plural of files, each of which has data of a group classified according to the sizes, the heights, or the types of the structures, and the data transmitting unit which transmits the requested structure shape data by the file unit.

When the above configuration is adopted, the three-dimensional-map distribution server device transmits the structure shape data of plural of structures in one file. Accordingly, the data required for generating the three-dimensional map image may be efficiently transmitted to the client terminal device. Moreover, structure shape data for the plurality of structures is stored in plural of files, each of which has data of a group classified according to the sizes, the heights, or the types of the structures. Accordingly, the three-dimensional-map distribution server device may realize efficient data transmission suitable for the band width of the network, by optimization of the size of the above files according to the band width of the network, and the like.

In addition to the configuration according to the above-described inventions, the three-dimensional-map distribution server device according to the present invention has a configuration in which the list of structure shape data includes plural of display control data, each of which is in correspondence with each of the structure shape data, and by each of which it is switched whether the correspondent structure are displayed or not based on the structure shape data according to predetermined conditions.

When the above configuration is adopted, the three-dimensional-map distribution server device has a configuration in which the client terminal device may judge, based on the display control data, whether the shape data is required to be transmitted, or not. Accordingly, the three-dimensional-map distribution server device may select the received shape data in more detailed manner in comparison with a case in which the client terminal device judges, based only on the position information of a district or structures, whether the shape data is required to be transmitted or not. Thereby, as the transferring amount of the structure shape data is decreased, based on the display control data, the three-dimensional-map distribution server device may efficiently transmit the shape data to the client terminal device through the network.

In addition to the configuration according to the above-described inventions, the three-dimensional-map distribution server device according to the present invention has a configuration in which each of the display control data is priority data, by which it is controlled whether displaying is performed or not, and has a value corresponding to the sizes, the heights or the types of each of the structure.

When the above configuration is adopted, the three-dimensional-map distribution server device has a configuration in which the client terminal device may control according to the sizes, the heights or the types of the structures whether the structure shape data is required to be transmitted or not, and whether displaying of the structures is performed or not.

In addition to the configuration according to the above-described inventions, the three-dimensional-map distribution server device according to the present invention has a configuration in which the storage unit stores as each of structure shape data, the vertex data of the bottom face and the height data of each of the structure.

When the above configuration is adopted, the amount of data transmitted from the three-dimensional-map distribution server device to the client terminal device may be reduced, in comparison with a case in which vertex data for every polygon and in the case of every polygon for structure displaying is stored as structure shape data for transmission.

In addition to the configuration according to the above-described inventions, the three-dimensional-map distribution server device according to the present invention has a configuration in which the server communication unit which receives a transmission request with eyepoint information or the list, which is required for generating the three-dimensional map image, and the list transmitting unit which, responding to the received transmission request with eyepoint information or the list, transmits requested lists of limited region within the requested range.

When the above configuration is adopted, the three-dimensional-map distribution server device transmits the list for a region with a limited range responding to the request. Accordingly, since the three-dimensional-map distribution server device does not transmit the list of all the stored shape data at a time, the data required for generating the three-dimensional map image may be efficiently transmitted to the client terminal device.

In addition to the configuration according to the above-described inventions, the three-dimensional-map distribution server device according to the present invention includes: a searching command generating unit which, when the server communication unit receives a three-dimensional position information of a point, which is in correspondence with a three-dimensional position information of a selected structure or a three-dimensional position information of a selected point in the three-dimensional map image and has display information of the related point, generates a searching command in which the received three-dimensional position information is converted into a two-dimensional position information; and a searched-result transmitting unit which generates display data for displaying information, which is stored in correspondence with two-dimensional position information, and the position of which is within a predetermined range from the two-dimensional position information in the searching command, and transmits the display data through the server communication unit.

When the above configuration is adopted, the three-dimensional-map distribution server device may provide, in addition to the data for generating the three-dimensional map image, information on the vicinity of a structure displayed in the three-dimensional map image or on the vicinity of a point representing information on a location.

Another three-dimensional map distribution server device according to the present invention includes: a storage unit which stores a plurality of point data, each of which is in correspondence with a point in a three-dimensional map image, and each of which has display information of the related point; a server communication unit connected to a network; a list transmitting unit which transmits through the server communication unit a list, which includes a plural of point data within a district and position information of the district or of the points; and a data transmitting unit which, when the server communication unit receives a transmission request for the point data selected based on the position information in the list, transmits requested point data in the storage unit through the server communication unit.

When the above configuration is adopted, the three-dimensional-map distribution server device, in the first place, transmits the list of point data for the point representing information on a plurality of locations to the client terminal device connected to the network , and then, transmits the point data selected based on position information from the list thereto. Accordingly, the three-dimensional-map distribution server device does not transmit the point data which is decided not to be required for generation of the three-dimensional image in the client terminal device, and the data required for generating the three-dimensional map image may be efficiently transmitted to the client terminal device.

A client terminal device according to the present invention includes: a client communication unit connected to a network; a list receiving unit which receives a list, which includes a plurality of structure shape data within a district drawn on a ground to generate a three-dimensional map image, and has position information of the district or of structures, through the client communication unit; a data receiving unit which transmits a transmission request for the structure shape data within a range of a predetermined distance from the eyepoint, where the structure selected based on eyepoint information to generate a three-dimensional map image and on position information in the list, through the client communication unit, and receives the requested structure shape data, through the client communication unit; an image data generating unit which generates a three-dimensional map image data within a field of view from the eyepoint toward the ground at a angle, using the structure shape data received based on the transmission request; and a display unit which displays a three-dimensional map image, based on the data generated by the image data generating unit.

When the above configuration is adopted, the client terminal device generates and displays the three-dimensional map image, using the shape data within the range of a predetermined distance from the eyepoint. Accordingly, the total data amount of the received shape data may be prevented from becoming a huge amount, for example, even in the case of a wide field of view commanding a distant view from the eyepoint. Thereby, the client terminal device may efficiently receive the shape data through the network, and may smoothly display the three-dimensional map image at once.

In addition to the configuration according to the above-described invention, the client terminal device according to the present invention has a configuration in which the list of the structure shape data includes file names of files, each of which has data of a group classified according to the sizes, the heights, or the types of the structures, and the data receiving unit designates the file name in a transmission request for the shape data, and receives the requested structure shape data by the file unit.

When the above configuration is adopted, the data required for generating the three-dimensional map image may be efficiently received from the three-dimensional map distribution server device because the client terminal device receives the structure shape data for a plurality of structures in one file. Moreover, the shape data for the plurality of structures is stored as files, each of which has data of a group classified according to the sizes, the heights, or the types of the structures. Accordingly, the client terminal device may efficiently receive data from the three-dimensional map distribution server device according to the band width of the network, by optimization of the size of the above files according to the band width of the network, and the like.

In addition to the configuration according to the above-described inventions, the client terminal device according to the present invention has a configuration in which the list of structure shape data includes plural of display control data, each of which is in correspondence with each of the structure shape data, and by each of which it is switched whether the correspondent structure are displayed or not based on the structure shape data according to predetermined conditions, and the data receiving unit transmits a transmission request only for the structure shape data, which is located within a range of a predetermined distance from the eyepoint, and which meets requirements for the distance from the eyepoint and the display control data.

When the above configuration is adopted, the client terminal device may judge, based on the display control data, whether the shape data is required to be transmitted, or not. Accordingly, the three-dimensional-map distribution server device may select the received shape data in more detailed manner in comparison with a case in which it is judged, based only on the position information of a district or structures, whether the shape data is required to be transmitted or not. Thereby, the client terminal device may efficiently receive the shape data required for generating the three-dimensional map image through the network.

In addition to the configuration according to the above-described inventions, the client terminal device according to the present invention includes: a selecting unit which selects a point in the three-dimensional map image displayed in the display unit, from the points each of which is in correspondence with a structure or a location within the three-dimensional map image and has display information of the related point; and a search instructing unit which transmits an searching instruction for vicinity information of the selected structures or points, which includes position information of the selected structure or point, through the client communication unit, wherein the display unit which displays the searched result, which is received through the client communication unit based on the searching instruction, together with the three-dimensional map image.

When the above configuration is adopted, the client terminal device may display information on the vicinity of a structure or on the vicinity of a point representing information on a location selected from the three-dimensional map image displayed on the display unit, together with the three-dimensional map image.

Another client terminal device according to the present invention includes: a client communication unit connected to a network; a list receiving unit which receives a list, which includes a plurality of point data, each of which is in correspondence with each of locations, within a district and drawn for display information on a ground to generate a three-dimensional map image, and has position information of the district or of points, through the client communication unit; a data receiving unit which transmits a transmission request for the point data within a range of a predetermined distance from the eyepoint, where the point selected based on eyepoint information to generate a three-dimensional map image and on position information in the list, through the client communication unit, and receives the requested point data, through the client communication unit; an image data generating unit which generates a three-dimensional map image data within a field of view from the eyepoint toward the ground at a angle, using the point data received based on the transmission request; and a display unit which displays a three-dimensional map image, based on the data generated by the image data generating unit.

When the above configuration is adopted, the client terminal device generates and displays the three-dimensional map image, using the point data within the range of a predetermined distance from the eyepoint. Accordingly, the total data amount of the received point data may be prevented from becoming a huge amount, for example, even in the case of a wide field of view commanding a distant view from the eyepoint. Thereby, the client terminal device may efficiently receive the point data through the network, and may generate and display the three-dimensional map image.

A three-dimensional map distribution system according to the present invention includes: the three-dimensional map distribution server device according to the above-described inventions, which is connected to a network; and the client terminal device according to the above-described inventions, which is connected to the network.

When the above configuration is adopted, the data for generating the three-dimensional map image may be efficiently transmitted from the three-dimensional-map distribution server device to the client terminal device through the network, and the three-dimensional map image using the data may be displayed on the client terminal device.

### Effect of the Invention

According to the present invention, data for generating a three-dimensional map image may be efficiently transmitted through a network.

### Brief Description of the Drawings

FIG. 1 is a configuration diagram showing a three-dimensional city information delivery system according to an embodiment of the present invention;
FIG. 2 is a block diagram showing a hardware configuration of a client PC in FIG. 1;
FIG. 3 is a view showing storage contents of a storage device in FIG. 2;
FIG. 4 is a block diagram showing functions which are realized when three-dimensional city information is delivered in the three-dimensional city information delivery system shown in FIG. 1;
FIG. 5 is a view showing storage contents of a storage device in the three-dimensional-map delivery server shown in FIG. 1;
FIG. 6 is a view showing a predetermined region for which a three-dimensional map image is generated, based on the three-dimensional map data shown in FIG. 5;
FIG. 7 is one example of three-dimensional map images for a certain division shown in FIG. 6;
FIG. 8 is a view showing data required for generating a three-dimensional map image of a division shown in FIG. 7, wherein the image is obtained by viewing the division from an arbitrary eyepoint;
FIG. 9 is an explanatory view showing the data structure of a ground data file shown in FIG. 5;
FIG. 10 is an explanatory view showing the data structure of a building data file shown in FIG. 5;
FIG. 11 is an explanatory view showing relations between the three-dimensional shape data of the buildings shown in FIG. 8 and the data stored in each record of the building data file;
FIG. 12 is an explanatory view showing the data structure of a point data file shown in FIG. 5;
FIG. 13 is an explanatory view showing the data structure of a wide area control file in FIG. 5;
FIG. 14 is a view showing the storage contents of a storage device in a spatial database server shown in FIG. 1;
FIG. 15 is an explanatory view showing the data structure of a city information data base;
FIG. 16 is a flow chart showing processing by which a three-dimensional map image is displayed on the client PC shown in FIG. 1;
FIG. 17 is a view showing one example of an initial screen displayed on a display device shown in FIG. 4;
FIG. 18 is an explanatory view explaining processing by which a three-dimensional-image generating section shown in FIG. 4 generates lists for ground data, building data, and point data;
FIG. 19 is a view showing a three-dimensional map image in which an area including a division shown in FIG. 7 is seen from an eyepoint at a distance which is within a first radius or less, wherein the mage is displayed on the display screen;
FIG. 20 is a flow chart showing processing by which a searched result for a convenience store is displayed on the client PC shown in FIG. 1; and
FIG. 21 is a view showing an image on the display screen, wherein the image is displayed when a character string "×o building" is selected in the three-dimensional map image shown in FIG. 19.

### Description of Reference Numerals

- 1: THREE-DIMENSIONAL MAP DELIVERYSERVER(THREE-DIMENSIONAL MAP DISTRIBUTION SERVER DEVICE);
- 3: INTERNET (NETWORK);
- 4: CLIENT PC (CLIENT TERMINAL DEVICE);
- 14: COMMUNICATION INTERFACE (CLIENT COMMUNICATION UNIT);
- 18: DISPLAY DEVICE (DISPLAY UNIT);
- 31: COMMUNICATION INTERFACE (SERVER COMMUNICATION UNIT);
- 32: STORAGE DEVICE (STORAGE UNIT);
- 36: WEB SERVER SECTION (LIST TRANSMITTING UNIT, DATA TRANSMITTING UNIT, SEARCHING-COMMAND GENERATING UNIT, AND SEARCHED-RESULT TRANSMITTING UNIT);
- 112: THREE-DIMENSIONAL-IMAGE GENERATING SECTION (LIST RECEIVING UNIT, DATA RECEIVING UNIT, AND IMAGE DATA GENERATING UNIT); and
- 113: SEARCH REQUESTING SECTION (SELECTING UNIT, AND SEARCH INSTRUCTING UNIT).

### Best Mode for Carrying Out the Invention

Hereinafter, referring to drawings, a three-dimensional-map distribution server device, a client terminal device, and a three-dimensional-map distribution system according to embodiments of the present invention will be explained. A three-dimensional map distribution server will be explained as one example of the three-dimensional-map delivery server device. A client personal computer (PC) will be explained as one example of the client terminal device. A three-dimensional city information distribution system will be explained as one example of the three-dimensional-map delivery system.

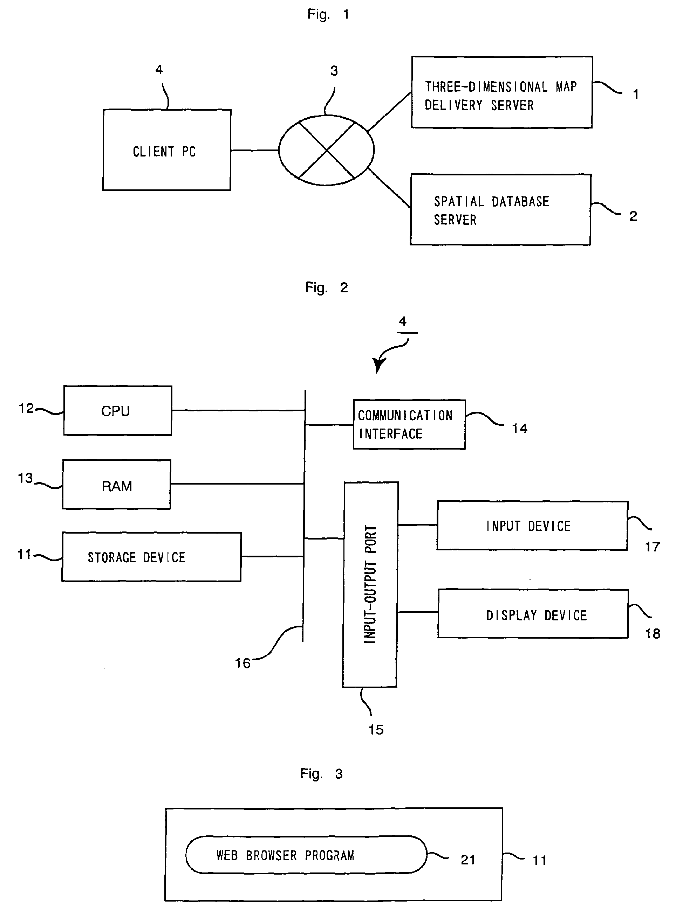

FIG. 1 is a configuration diagram showing the three-dimensional city information delivery system according to an embodiment of the present invention. The three-dimensional city information delivery system has: a three-dimensional-map delivery server 1 as the three-dimensional-map delivery server device; a spatial database server 2; and a client PC (Personal Computer) 4 as the client terminal device. The three-dimensional-map delivery server 1 and the spatial database server 2 are connected to the Internet 3 as the network. The client PC (Personal Computer) 4 is connected to the Internet 3.

This three-dimensional city information delivery system displays a three-dimensional map image on the client PC 4, using data stored in the three-dimensional-map delivery server 1. This three-dimensional city information delivery system searches in the spatial database server 2 for convenience stores , which are in the vicinity of a selected building and the like at the three-dimensional map image on the client PC 4, and displays the searched result on the client PC 4.

FIG. 2 is a block diagram showing a hardware configuration of the client PC 4 in FIG. 1. The client PC 4 has: a storage device 11 storing programs and data; a central processing unit (CPU) 12 executing the programs; a random access memory (RAM) 13 used as a storage area of the CPU 12 executing programs and so on; a communication interface 14 as a client communication unit connected to the Internet 3; an input-output port 15; and a system bus 16 by which the above components are connected to each other. Moreover, to the input-output port 15 in the client PC 4, an input device 17 such as a pointing device, and a display device 18, as a display unit, such as a liquid crystal monitor are connected.

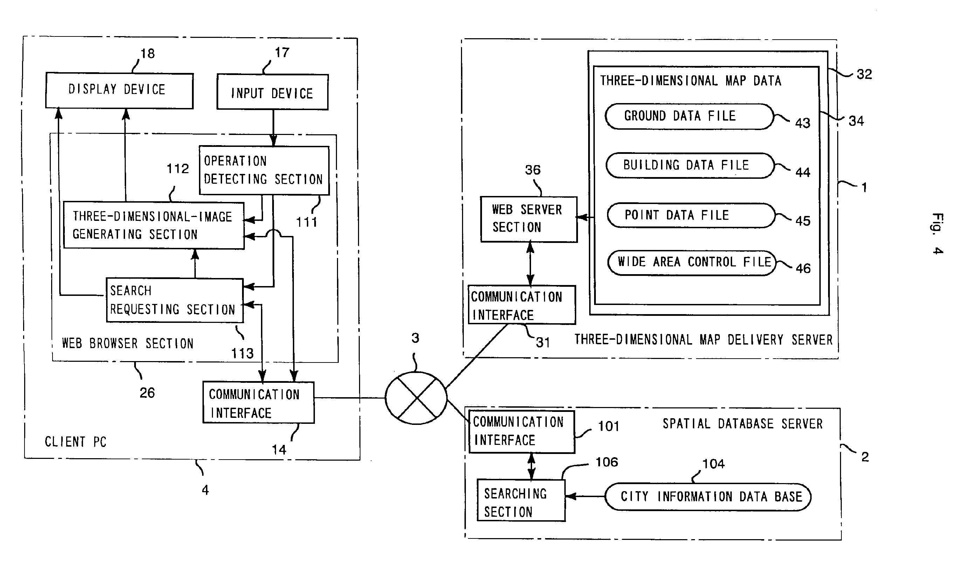

FIG. 3 is a view showing storage contents of the storage device 11 in FIG. 2. The storage device 11 in the client PC 4 stores a Web browser program 21. The CPU 12 in the client PC 4 executes this Web browser program 21 to realize a Web browser section 26 in the client PC 4 (Refer to FIG. 4). FIG. 4 is a block diagram showing functions which are realized to deliver three-dimensional city information in the three-dimensional city information delivery system shown in FIG. 1.

The client PC 4 has the above-described configuration. Then, the three-dimensional-map delivery server 1 will be explained.

The three-dimensional-map delivery server 1 shown in FIG. 1 has: a communication interface 31 (Refer to FIG. 4) as a server communication unit connected to the Internet 3; and a storage device 32 as a storage unit. In addition, the three-dimensional-map delivery server 1 has a CPU, a RAM, a ROM, a system bus, and the like, which are not shown in the drawings. Each of the above components in the three-dimensional-map delivery server 1 has the same function as that of the component with the same name in the client PC 4 shown in FIG. 2. Accordingly, the above components are not shown in the drawings, and their descriltion will be eliminated.

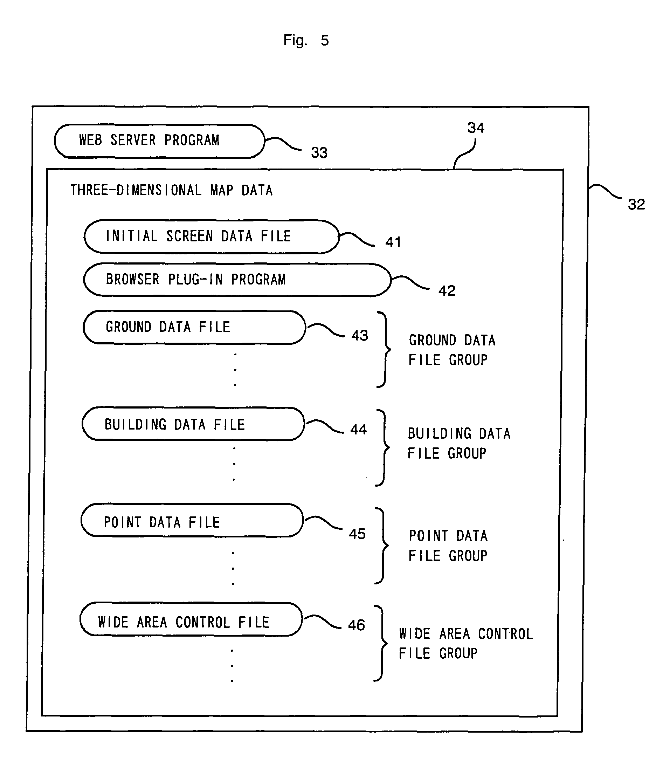

FIG. 5 is a view showing the storage contents of the storage device 32 in the three-dimensional-map delivery server 1 shown in FIG. 1. The storage device 32 in the three-dimensional-map delivery server 1 stores a Web server program 33 and three-dimensional map data 34. The CPU in the three-dimensional-map delivery server 1 executes the Web server program 33 to realize the Web server section 36 in the three-dimensional-map delivery server 1 as shown in FIG. 4. The Web server section 36 functions as a list transmitting unit, a data transmitting unit, a searching command generating unit, and a searched-result transmitting unit.

Based on the Hyper Text Transfer Protocol (HTTP), the Web server section 36 in the three-dimensional-map delivery server 1 performs communication through the communication interface 31, and the Web browser section 26 in the client PC 4 performs communication, through the communication interface 14. For example, the Web browser section 26 transmits a transmission request for display data and files, to the Web server section 36, based on operation of the input device 17 and the like. The Web server section 36 transmits the requested display data and the requested file, to the Web browser section 26. The Web browser section 26 generates a display image of the received display data and the received file. The display device 18 displays the display image.

The three-dimensional map data 34 is formed with various kinds of data which are required for generating a three-dimensional map image of a predetermined region such as the 23 wards in Tokyo, wherein the image is obtained by viewing the region from an arbitrary eyepoint. More specifically, this three-dimensional map data 34 has: an initial screen data file 41; a browser plug-in program file 42; a ground data file group including a plurality of ground data files 43; a building data file group including a plurality of building data files 44; a point data file group including a plurality of point data files 45; and a wide area control file group including a plurality of wide area control files 46.

The file names of the plurality of files 41 to 46 in the three-dimensional map data 34 are different from one another. Accordingly, one file may be specified from the above plurality of files 41 to 46 by specifying a file name. As described later, the above plurality of files 41 to 46 in the three-dimensional map data 34 are transmitted to the client PC 4 through the Internet 3. Accordingly, to complete the transmission in short time, each of the files is a divided one to be the data size into from several kilobytes to several hundreds of kilobytes, preferably into several tens of kilobytes.

The initial screen data file 41 has initial screen data (for a structure of a display frame, a menu, and the like), wherein the initial screen is displayed on the display device 18 by the browser section 26.

The browser plug-in program file 42 is imported and executed into the browser section 26 in the client PC 4, and realize as a part of the browser section in FIG. 4, an operation detecting section 111, a three-dimensional-image generating section 112 as a list receiving unit, a data receiving unit and an image data generating unit, and a search requesting section 113 as a selecting unit and a search instructing unit. The operation detecting section 111 supplies an instruction based on user operation of the input device 17, to the three-dimensional-image generating section 112 and the search requesting section 113. The three-dimensional-image generating section 112 generates the three-dimensional map image data, and displays a three-dimensional map image on the display device 18 based on the generated data. The search requesting section 113 displays the result of the search process on the display device 18.

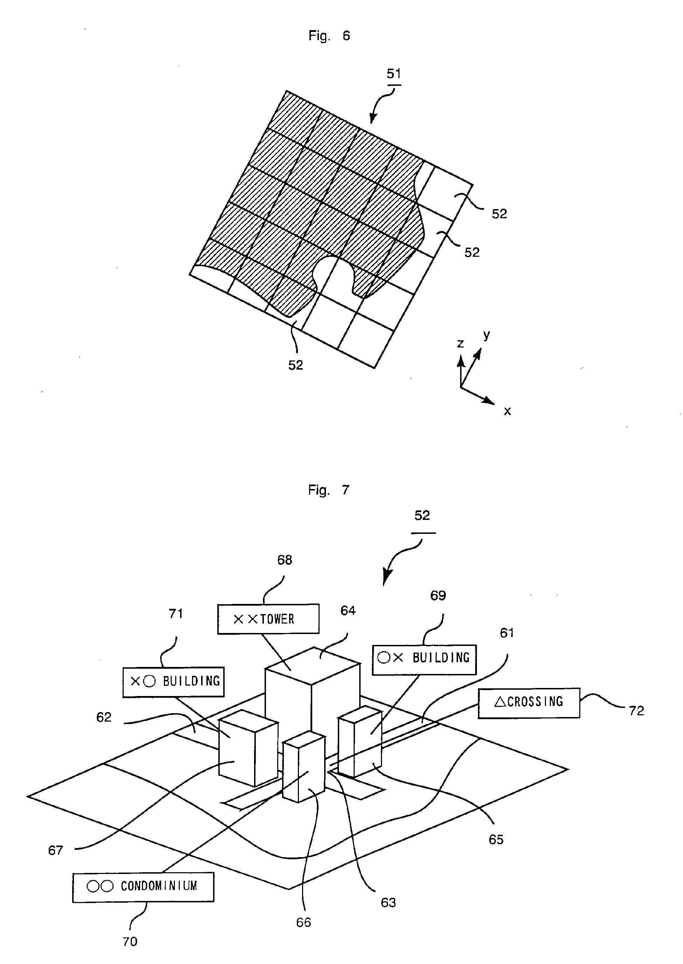

FIG. 6 is a view showing a predetermined region 51, where the three-dimensional map image is generated based on the three-dimensional map data 34 in FIG. 5. This predetermined region 51 is a wide region such as the 23 wards in Tokyo. The predetermined region 51 is divided into a plurality of divisions 52. In the example shown in FIG. 6, the predetermined region 51 is divided into twenty-five divisions 52 with a same-size rectangular shape.

FIG. 7 is one example of three-dimensional map image for a certain division 52 in FIG. 6. The division 52 in FIG. 7 has: two roads 61 and 62 which are intersect to form a crossing; and four buildings 64, 65, 66, and 67 which stand at four corners of the crossing 63 of the two roads 61 and 62. The three-dimensional map image in FIG. 7 has four building names 68, 69, 70, and 71, and a crossing name 72.

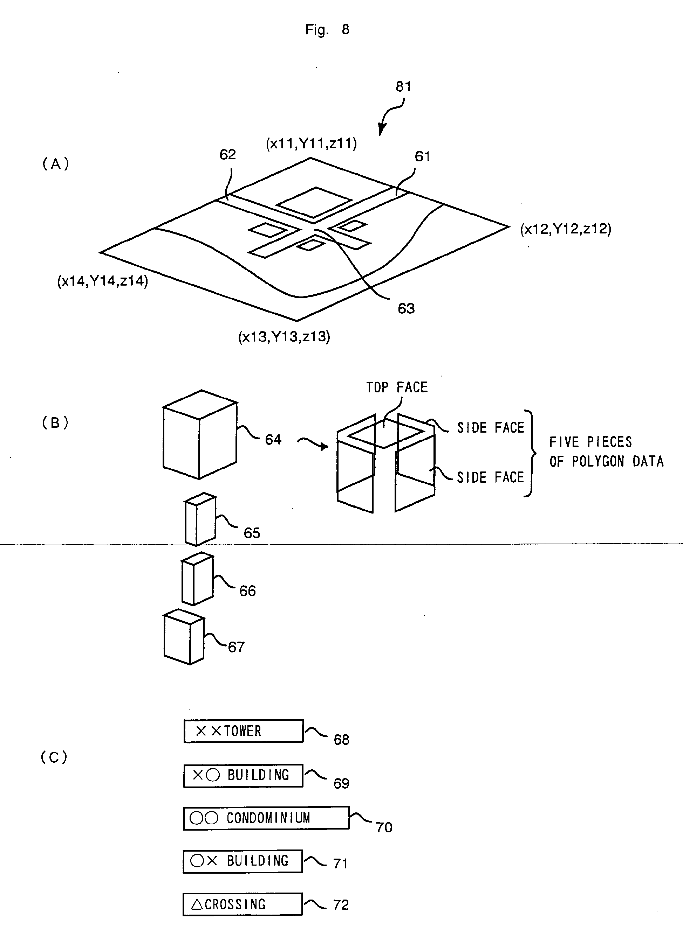

In order to generate a three-dimensional map image in FIG. 7, plural pieces of data in FIG. 8 are used. FIG. 8 is a view showing the plural pieces of data, which are used for generating the three-dimensional map image of the division 52 in FIG. 7, wherein the image is obtained by viewing the division from an arbitrary eyepoint.

In order to generate the three-dimensional map image in FIG. 7, first, ground texture data 81 (FIG. 8A) for generating the ground image of the division 52 in FIG. 7 is prepared.
The ground texture data 81 has: ground image data of the division 52; and coordinate values of four points for specifying the positions of the four corners of the image in a three-dimensional space. As the image of the ground texture data 81, for example, an image based on aerial photographs (satellite photographs) or an image based on vector data may be used. In the image of the ground texture data 81 in FIG. 8, the two roads 61 and 62 which are intersect at the crossing 63 are drawn. As a coordinate value, a set of the latitude value, the longitude value and an altitude value, or a set of distance value from a predetermined reference point which shows a relative position relation to the point may be used.

In order to generate the three-dimensional map image in FIG. 7, then, four pieces of three-dimensional shape data (FIG. 8B), which are corresponding to the four building 64, 65, 66, and 67 standing on the division 52 in FIG. 7, are prepared. For example, in the case of a building being in a square pole shape, the three-dimensional shape data has four pieces of polygon data of the side faces of the building, and one piece of polygon data of the top face of the building. Each of the polygon data of faces has coordinate values of four vertices for specifying the positions of the four corners of each side in a three-dimensional space.

Furthermore, in order to generate the three-dimensional map image in FIG. 7, five pieces of point data (FIG. 8C) on points 68, 69, 70, 71, and 72, which are related to the division 52 in FIG. 7, are prepared. The point data has a character string such as the name of a building or the name of a crossing, and one coordinate value for specifying the position in a three-dimensional space, wherein the character string is linked to the position. Further, the point data may have an image, instead of the character string, which is pasted onto the point.

The above mentioned ground texture data 81, the shape data, and the point data are stored in the three-dimensional-map delivery server 1. That is, in order to generate a three-dimensional map image of a region 51, wherein the image is obtained by viewing the division from an arbitrary eyepoint, like the three-dimensional map image in FIG. 7, as shown in FIG. 5, the storage device 32 in the three-dimensional-map delivery server 1 in FIG. 1 stores, a plurality of ground data files 43 including the ground texture data, a plurality of building data files 44 including the shape data, a plurality of point data files 45 including the point data, and a plurality of wide area control files 46 including a list of grounds, structures, and points in a certain district (division).

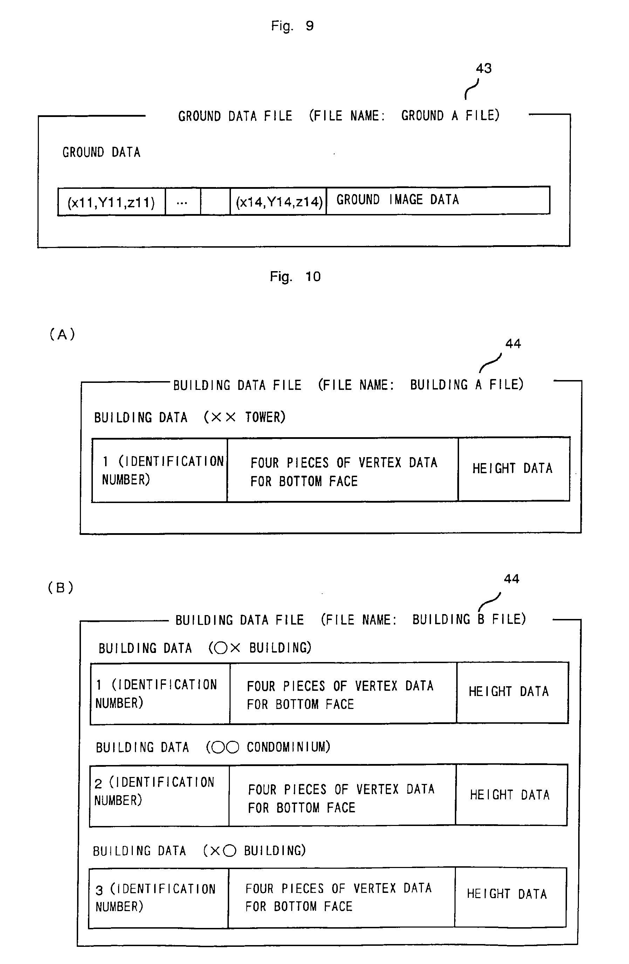

FIG. 9 is an explanatory view showing the data structure of the ground data file 43 shown in FIG. 5. The ground data file 43 according to the present embodiment has a ground texture data 81 for a certain division 52. That is, the ground data file 43 has a ground image data for a certain division 52, and data of coordinate values of four points for specifying the positions of the four corners of the image in a three-dimensional space by their values. The file name of the ground data file 43 in FIG. 9 is "GROUND A FILE".

FIGs. 10A and 10B are explanatory views, each figure showing the data structure of the building data file 44 in FIG. 5. The building data file 44 has one or a plurality of records. Each record in the building data file 44 stores data of one structure. The building data file 44 in FIG. 10A has one record storing the building data of one building denoted by "xx tower", and has a file name of "BUILDING A FILE". The building data file 44 in FIG. 10B has three records storing the building data of three buildings denoted by "o× building", "oo condominium", and "×o building", and has a file name of "BUILDING B FILE".

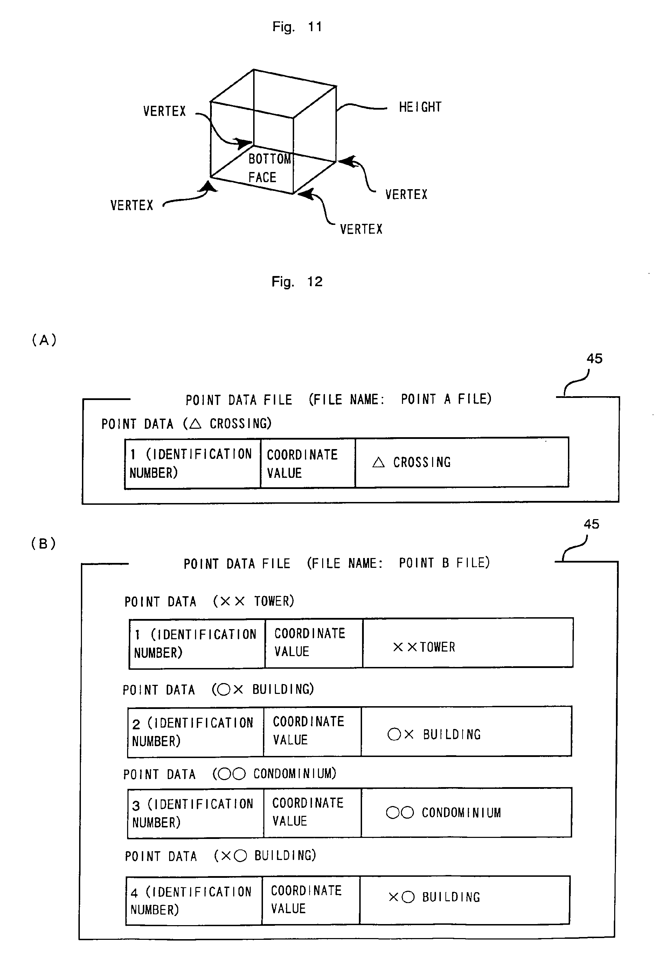

Each of the records in the building data file 44 has an identification number by which the records are distinguished from one another at least in the building data file 44. More specifically, as shown in FIG. 11, each record in the building data file 44 has as shape data of the structure, data showing the positions of four vertices on the bottom face of the building, and data showing the height of the building. FIG. 11 is an explanatory view showing relations between the three-dimensional shape data of the buildings in FIG. 8 and the data stored in each record of the building data file 44. Further, a record may be provided with data on an image pasted on the side or top face of a building. Data representing the height of a building may be formed with one value by which the height is represented, or with two values of the value for the position of the bottom face and that for the position of the top face of the building. The one value representing the height may be such as, for example, the hight value of itself or the number of floors.

In comparison with a case in which five pieces of polygon data for the four side faces and the top face of the building are stored in the building data file 44, the stored data amount may be reduced by the above configuration, where each record data in the building data file 44 has the four vertices of the bottom face of a building and the height of the building. Moreover, by making the amount of stored data reduce, the amount of the transmitting data through the Internet 3 is also reduced. Further, the client PC 4 constructs the five pieces of polygon data, using the position data of the four vertices of the bottom face and the height data.

Further, as show in FIG. 10, data of a plurality of buildings in a certain division 52 are stored by being divided into a plurality of building data files 44. For example, the data of the plurality of buildings are divided and stored into the building data files 44, by grouping them by the sizes, the heights, or the types of the buildings. The classification according to the types may be based on the structures of the buildings, for example, a flat roof, a tiled roof, and the like; on the use objects of the buildings, for example, a commercial facility, a production facility, an ordinary house, and the like; or, furthermore, on the combinations of the above classifications. By being stored the pieces of data for a plurality of buildings in the division 52 in plural building data files 44, wherein the each buildings data is classified according to the sizes, the heights, or the types of the buildings; for example, when a three-dimensional map image commanding a distant view of the certain division 52 is generated, the three-dimensional map image may be generated using only the building data files 44 storing the data of landmark buildings in the division 52.

FIGs. 12A and 12B are explanatory views, each showing the data structure of a point data file 45 in FIG. 5. The point data file 45 has a plurality of records. The point data file 45 in FIG. 12A has one record storing point data for one point denoted by "Δ crossing", and has a file name of "POINT A FILE". The point data file 45 in FIG. 12B has four records storing point data for four points denoted by " xx tower", "○× building", "○○ condominium", and "×○ building", and has a file name of "POINT B FILE".

Each of the records in the point data file 45 has one point data, and an identification number by which the records are distinguished from one another at least in the building data file 44. The point data has a character string displayed as a point in the three-dimensional map image, and the coordinate value of one point specifying a position in the three-dimensional space, wherein the character string is linked to the position.

Further, as shown in FIG. 10, a plurality of points in the certain division 52 are divided and stored into a plurality of point data files 45. The pieces of data on the plurality of points are divided into the point data files 45, which are grouped according to, for example, the importances, or the types of the points, for the storage. The classification according to the types may be based on the attributes represented by the points, such as the name of a crossing, and the name of a building. By being stored the pieces of data for a plurality of points in the certain division 52 in plural point data files 45, wherein the each point data is classified according to the importances, or the types of the points; for example, when a three-dimensional map image commanding a distant view of the certain division 52 is generated, the three-dimensional map image may be generated using only the point data files 45 storing the data of important points in the division 52.

Further, the ground data file 43 may have a configuration in which the file 43 includes a plurality of records, and each of the records stores a ground texture data 81 for one ground division 52. In this case, each of the records in the ground data file 43 may have an identification number by which the records are distinguished from one another at least in the ground data file 43.

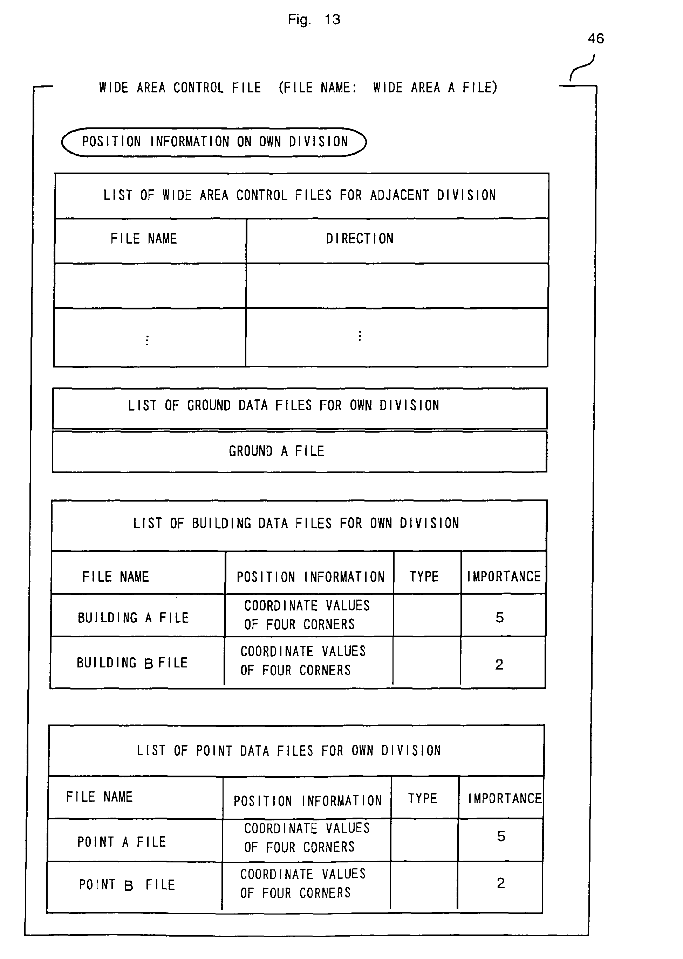

FIG. 13 is an explanatory view showing the data structure of a wide area control file 46 in FIG. 5. The wide area control file 46 is a file storing information for a certain division 52. More particularly, the wide area control file 46 stores, as information for the certain division 52, the coordinate value of the own division 52 (the coordinate values of all vertices in the outline), a list of wide area control files 46 for the adjacent divisions 52, the list of ground data file 43 for the own division 52, the list of building data files 44 for the own division 52, and the list of point data files 45 for the own division 52.

The position information on the own division 52 is a value showing the position of the division 52 in the predetermined region 51, wherein the position is stored in the wide area control file 46. For example, when the division 52 has a rectangular shape, the position information on the own division 52 is a set of the coordinate values of four points, specifying the four corners positions of the rectangular shape in the three-dimensional space are specified. As the coordinate value, a set of a latitude value, a longitude value and an altitude value, or a set of distance values from a predetermined reference point, wherein the distance shows a relative position relation to the point, may be used.

The list of wide area control files 46 for the adjacent division 52 is formed as the list of file names of the wide area control files 46, which are stored in the wide area control file 46 for the adjacent division 52 and which are in contact with the own division 52. Each of the file names are corresponded with such as its position information, or the directions from the own division 52. The position information , for example, eight directions based on the four points of the compass may be used as the directions of the adjacent division 52 from the own division 52.

The list of the ground data files 43 for the own division 52 has the file names of ground data files 43 storing the ground data for the own division 52. The wide area control file 46 in FIG. 13 stores the file name of "GROUND A FILE" for the ground data file 43.

The list of the building data files 44 belonging to the own division 52 has the file names of all the building data files 44 storing the building data for the own division 52. The wide area control file 46 in FIG. 13 stores "BUILDING A FILE" and "BUILDING B FILE" as file names of the ground data file 43.

In the list of the building data files 44 belonging to the own division 52, the position information of the building in the three-dimensional space, the value of the type of the building, the value of the importance (priority data) for the building are brought into correspondence with the file name for each of the building data files 44. Further, in addition to the above items, the building name, the building owner, the address of the building, and the names of companies in a tenant building may be configured to be stored.

In the list of the building data files 44 belonging to the own division 52, for example, the position information in the three-dimensional space, which is correspondence with each of the file name of the building data files 44, is the coordinate values of four corners of a rectangular shape area where all the buildings in the building data files 44 distributed. Further, the position information may be the coordinate value of a center point of the rectangular shape area, instead of the coordinate values of the four corners.

The type in correspondence with the file name for each of the building data files 44 represents a common type of buildings in each of the building data files 44. The structures of the buildings, for example, a flat roof, a tiled roof, and the like, the use objects of the buildings, for example, a commercial facility, a production facility, an ordinary house, and the like, or, furthermore, the combinations of the above classifications may be used for the classification according to the above types.

The importance in correspondence with the file name for each of the building data files 44 is represented by, for example, a value selected from numbers of 1 through 5. This importance may be determined, for example, in such a way that an importance in correspondence with a building data file 44 including a building which is characteristic when a distant view of the division 52 is commanded, is assumed to be five, and an importance in correspondence with a building data file 44 including a building which forms the scenery of the division 52 only when a close view of the division 52 is commanded, is assumed to be one. In other way of determining the importance, buildings are classified according to the sizes, the heights, or the like to make each class one building data file 44, and the values of the importances may be decided in correspondence with the size, the height, and the like.

The list of the point data files 45 belonging to the own division 52 has the file names of all the point data files 45 which store the point data for the own division 52. The wide area control file 46 in FIG. 13 stores "POINT A FILE" and "POINT B FILE" as the file names of the point data files 43.

In the list of the point data files 45 belonging to the own division 52, the position information in the three-dimensional space, the value of the type of the point, the value of the importance (priority data) for the point are brought into correspondence with the file name of each of the point data files 45.

In the list of the point data files 45 belonging to the own division 52, the position information in the three-dimensional space, wherein the information is in correspondence with the file name for each of the point data files 45, for example, is the coordinate values of four corners of a rectangular shape area, where all the points stored in the point data files 45 are distributed. Further, the position information may be the coordinate value of a center point of the rectangular shape area, instead of the coordinate values of the four corners.

The type in correspondence with the file name for each of the point data files 45 represents a common type of the points stored in each of the point data files 45. Points may be classified in connection with the classification of point objects such as points for roads, points for buildings; and these classifications may be used for the above types.

The importance in correspondence with the file name for each of the point data files 45 is represented by, for example, a value selected from numbers of 1 through 5. This importance may be determined, for example, in such a way that an importance in correspondence with a point data file 45 including a point which is characteristic when a distant view of the division 52 is commanded, is assumed to be five, and an importance in correspondence with a point data file 45 including only points which make detailed explanation of the division 52 when a close view of the division 52 is commanded, is assumed to be one.

Further, in this embodiment, the wide area control files 46 are provided in one-to-one correspondence with the divisions 52. As described above, when information on each of one division 52 is stored in each of one wide area control file 46, various pieces of data are required to be stored in each of wide area control files 46. Thereby, a plurality of the wide area control files 46 are provided for each of the divisions 52, and each of the data of one division 52 may be divided and stored in a plurality of wide area control files 46. For example, each of the division 52 further subdivided into a plural of subdivided divisions, and wide area control file 46 may be provided for each of the subdivided division. In this case, the wide area control files 46 are provided in a hierarchical manner, and link information which represents a relation with its upper-level wide area control files 46 and its lower-level wide area control files 46 is added to each of the wide area control files 46.

There may be further another configuration, for example, in which the ground data for the own division 52, the list of the buildings in the own division 52, the list of the points in the own division 52 are separately stored in the wide area control files 46. When separate wide area control files 46 are provided for each of the data types as described above, a method for making divisions for a wide area control file 46 according to one type, and a method for making divisions for a wide area control file 46 according to another type may be different from each other. Moreover, all the methods for making divisions for wide area control files 46 according to each of types may be different from the method for making the divisions 52 in FIG. 6.

In addition to the above configurations, there may be another configuration, for example, in which position information on the own division 52 for each of wide area control files 46 and the lists in a wide area control file 46 of a division 52 adjacent to the own division 52 are stored in a file (for example, a higher-level wide area control file) different from those storing the wide area control files 46.

The three-dimensional-map delivery server 1 is configured as described above. Then, the spatial database server 2 will be explained.

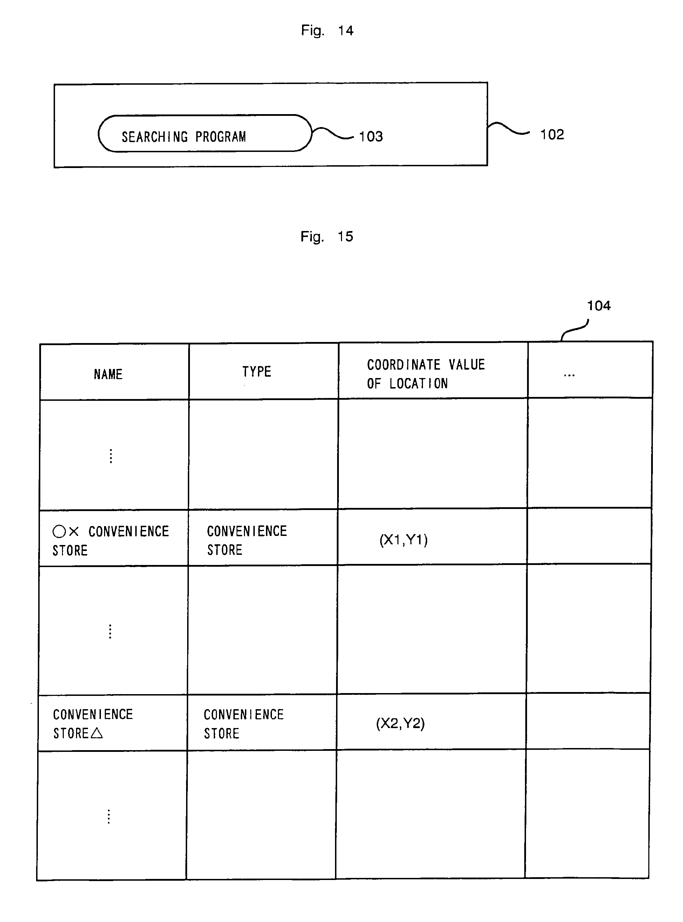

The spatial database server 2 in FIG. 1 has a communication interface 101 connected to the Internet 3 (Refer to FIG. 4), and a storage device 102 (refer to FIG. 14). Furthermore, the spatial database server 2 has a CPU, a RAM, a ROM, a system bus, and the like, which are not shown in the drawings. Each of the above components in the spatial database server 2 has the same function as that of the component with the same name in the client PC 4 shown in FIG. 2. Accordingly, the above components are not shown in the drawings, and their explanation will be eliminated.

FIG. 14 is a view showing the storage contents of the storage device 102 in the spatial database server 2 shown in FIG. 1. The storage device 102 in the spatial database server 2 stores a searching program 103. The CPU in the spatial database server 2 executes the searching program 103 to realize a searching section 106 in the spatial database server 2, as shown in FIG. 4. The searching section 106 searches a city information data base 104, based on a searching request received in the communication interface 101. The searching section 106 make the communication interface 101 transmit the searched result.

FIG. 15 is an explanatory view showing the data structure of the city information data base 104. The city information data base 104 stores information on various kinds of shops such as convenience stores, which exist in the predetermined region 51, in relation to the coordinates of the shop locations. The city information data base 104 has a plurality of records. Each of records in the city information data base 104 stores information of one shop. More particularly, each of the records in the city information data base 104 stores, as information on one convenience store, for example, the name of the convenience store, the value representing the type in correspondence with the convenience store, the coordinate value of the location representing the position of the convenience store, and the like. The coordinate value of the location representing the position of the convenience store is the coordinate value of the convenience store in a two dimensional space when the predetermined region 51 is considered as a plane. With the assumption that the value of the location representing the position of the convenience store is the coordinate value of the position in the two dimensional space, the value of the location may be easily generated, based on the address of the convenience store and the like.

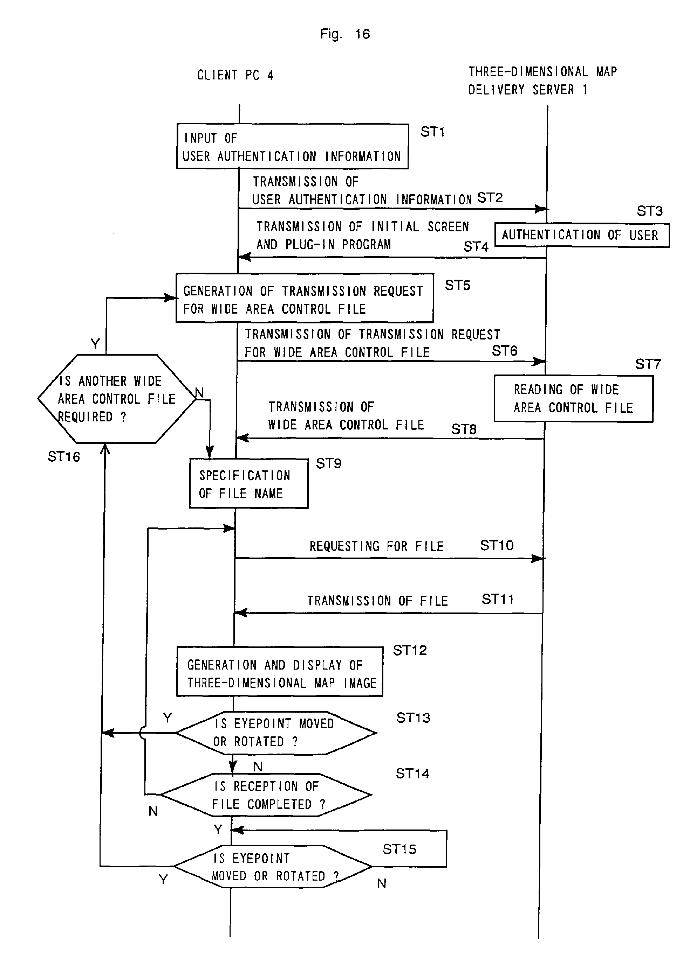

Then, the operation of the three-dimensional city information delivery system with the above-described configuration will be explained, referring to the functional block diagram shown in FIG. 4. FIG. 16 is a flow chart showing processing by which the three-dimensional map image is displayed on the client PC 4 shown in FIG. 1.

A user browsing the three-dimensional map image in the client PC 4 inputs user authentication information to the client PC 4, using the input device 17 (step ST1). The Web browser section 26 in the client PC 4 supplies the above user authentication information to the communication interface 14. The communication interface 14 in the client PC 4 sends the supplied user authentication information to the Internet 3. The communication interface 31 in the three-dimensional-map delivery server 1 receives the user authentication information, and supplies the received user authentication information to the Web server section 36 (step ST2).

The Web server section 36 in the three-dimensional-map delivery server 1 approves the access from the user, based on the user authentication information (step ST3), and imports for reading the initial screen data f ile 41 and the browser plug-in program file 42 from the three-dimensional map data 34, and supplies the read files to the communication interface 31. The communication interface 31 in the three-dimensional-map delivery server 1 transmits data in the supplied files to the communication interface 14 in the client PC 4 through the Internet 3 (step ST4). The communication interface 14 in the client PC 4 supplies the received files to the Web browser section 26.

The Web browser section 26 executes the browser plug-in program file 42. Thereby, as shown in FIG. 4, the operation detecting section 111, the three-dimensional-image generating section 112, and the search requesting section 113 are realized as parts of the browser section.

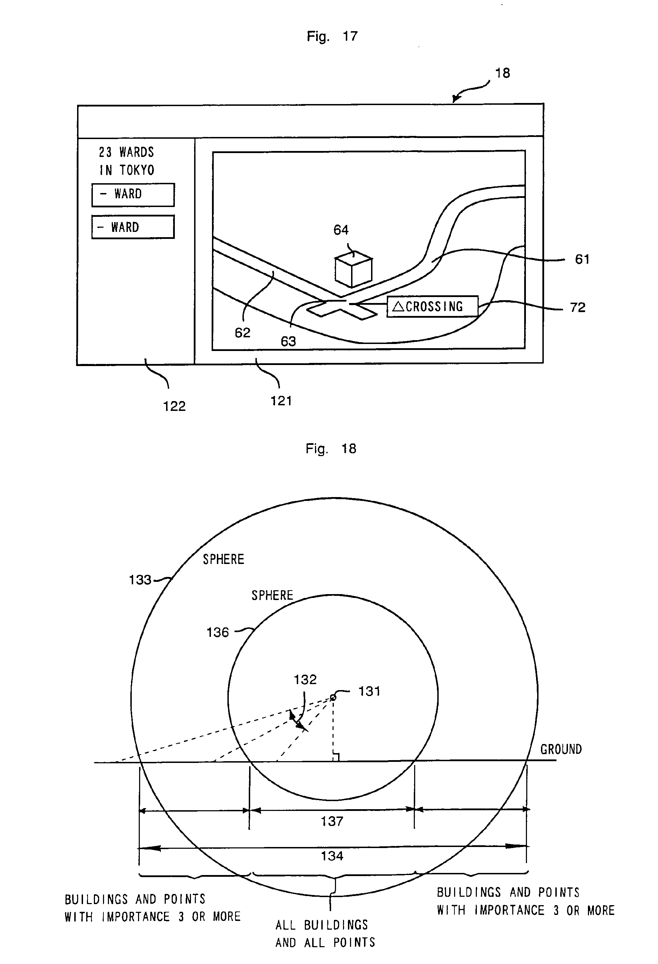

The display device 18 displays the initial screen, for example, shown in FIG. 17, using data in the initial screen data file 41 which was supplied from the communication interface 14 in the client PC 4 to the Web browser section 26. FIG. 17 is a view showing one example of the initial screen displayed on the display device 18 in FIG. 4. The initial screen shown in FIG. 17 has two display frames 121 and 122 which are arranged in the right and left direction. The right display frame 121 is a frame displaying the three-dimensional map image. The left display frame 122 is a frame displaying the menu and the like. Further, the map image is not displayed on the screen based on the initial screen data file 41, but frames and the like are displayed thereon, and the map image like shown in FIG. 17 is displayed later in the frame.

The three-dimensional-image generating section 112, in the first place, generates a transmission request for the wide area control file 46 (step ST5). The transmission request for the wide area control file 46, which is generated by the three-dimensional-image generating section 112 in the first place, is a transmission request for generating the initial screen of the three-dimensional map image. The transmission request for the wide area control file 46 includes the user authentication information, eyepoint information, and the like.

The above first eyepoint information may be, for example, information which is provided as data in the browser plug-in program file 42 to the client PC 4. Moreover, when the browser plug-in program file 42 has been executed before, the last eyepoint information, or predetermined eyepoint information in correspondence with the name of a city, a town, or a village, which the user selects from the list of cities, towns, and villages in the predetermined region 51, may be accepted.

The generated transmission request for the wide area control file 46 is transmitted to the Web server section 36 in the three-dimensional-map delivery server 1, through the communication interface 14 in the client PC 4, the Internet 3, and the communication interface 31 (step ST6).

When the Web server section 36 receives the above first transmission request for the wide area control file 46, the section 36 searches the ground range seen from the eyepoint included in the request, and imports and reads the wide area control file 46 in correspondence with the ground range (step ST7).

The wide area control file 46 imported for reading into the Web server section 36 is transmitted to the three-dimensional-image generating section 112 in the Web browser section 26 in the client PC 4 , through the communication interface 31 in the three-dimensional-map delivery server 1, the Internet 3, and the communication interface 14 (step ST8).

As described above, a wide area control file 46 for a certain division 52 is transmitted, based on a request by the three-dimensional-image generating section 112. Accordingly, the three-dimensional-map delivery server 1 does not transmit all the wide area control files 46 in the storage device 32 at a time. Thereby, the data required for generating the three-dimensional map image may be transmitted efficiently.

Further, there may be a configuration in which the three-dimensional-image generating section 112 transmits the file name of the wide area control file 46 for direct designation, instead of the eyepoint information, and the Web server section 36 transmits the requested wide area control file 46 responding to the specification.

When the first wide area control file 46 is received, the three-dimensional-image generating section 112 starts process for generating the three-dimensional map image seen from the above-described eyepoint (step ST9).

The three-dimensional-image generating section 112, in the first place, using the received wide area control file 46, specifies the ground data file 43, the building data file 44, and the point data file 45, which are required for generating the three-dimensional map image seen from the above-described eyepoint. FIG. 18 is an explanatory view explaining the specifying process, in which the three-dimensional-image generating section 112 in Fig. 4 generates the lists for the ground data file 43, the building data file 44, and the point data file 45.

The three-dimensional-image generating section 112, in the first place, specifies a field of view 132 for the three-dimensional-map image displayed in the right display frame 121, based on the position of an eyepoint 131, an angle of line of sight, a viewing angle, and the like, and extracts ground data within the field of view 132 from the wide area control file 46.

Then, the three-dimensional-image generating section 112 assumes a first sphere 133, which has the eyepoint 131 as the center and a predetermined radius (hereinafter, called a first radius) of, for example, one kilometers, and specifies a range 134 of a position which exists within the first sphere 133. Then, the three-dimensional-image generating section 112 extracts the file name of the building data file 44 and that of the point data file 45 from the wide area control file 46, wherein the files 44 and 45 are in correspondence with the value of the position which exists within the range 134, and in correspondence with an importance equal to or larger than a predetermined value (for example, 3).

Furthermore, the three-dimensional-image generating section 112 assumes a second sphere 136, which has the eyepoint 131 as the center and a radius (hereinafter, called a second radius) smaller than the first radius, and specifies a range 137 of a position which exists within the second sphere 136. Then, the three-dimensional-image generating section 112 extracts the file name of the building data file 44 and that of the point data file 45 from the wide area control file 46, wherein the files 44 and 45 are in correspondence with the value of the position which exists within the range 137.

Hear, the building data file 44 is correspondence with the four values at four corners of its location. Accordingly, the three-dimensional-image generating section 112 may judge that, when the value of any one of the four locations at the four corners is included within the range of the first sphere 133, or within the range of the second sphere 136, the file 44 is within the ranges of those spheres. Further, the three-dimensional-image generating section 112 may judge, for example, that, when all the four values at the four corners of its locations are included within the ranges of those spheres, the file 44 is within the ranges of those spheres.

Based on the above-described extracting process, the three-dimensional-image generating section 112 extracts the file names of all the building data files 44 and those of all the point data files 45, as the file names of the building data file 44 and the point data file 45 with regard to the range within the second sphere 136, and extracts the file names of the building data files 44 and those of the point data files 45 in correspondence with an importance equal to or larger than a predetermined value (for example, 3) with regard to the range outside the second sphere 136 and within the first sphere 133,

Further, the three-dimensional-image generating section 112 may extract records for building data having a volume equal to or larger than a predetermined value, based not on the importance, but on the size and the volume (the area of the bottom face × the height of a building) of a building. Moreover, the three-dimensional-image generating section 112 may extract records for building data, based on both of the importance and on the volume of buildings. Moreover, in the above-described extracting proces, the building data file 48 and the like are extracted based on a distance from the eyepoint 131 in the three-dimensional space, but, instead neglecting a height, the extracting is performed based on a distance on a two dimensional plane.

According to the above-described processing, the three-dimensional-image generating section 112 specifies the ground data file 43, the building data file 44, and the point data file 45, which are required to generate the three-dimensional map image.

According to the above-described configuration in which, the file names of the ground data files 43 within the predetermined region, the file names of the building data files 44, the file names of the point data files 45 are selected with reference to the position of the eyepoint, the total data amount for those pieces of data may be controlled in less, even when a three-dimensional map image is generated with a wide field of view, for example, an image commanding a distant view from the eyepoint.

Hear, according to the above-described embodiment, the three-dimensional-image generating section 112 extracts records through two stages which are divided into one case in which the distance from the eyepoint 131 is the predetermined radius (the first radius) or less, and the other case in which the distance is the second radius or less. In addition to the above configuration, there may be another configuration, for example, in which the three-dimensional-image generating section 112 extracts only records with a predetermined radius (the first radius) or less, or in which records are extracted through three or more stages.

Then, the three-dimensional-image generating section 112 generates transmission requests of these data files designating the file names of the specified data files 43, 44, and 45, and sequentially transmits these transmission requests to the Web server section 36 (step ST10) . The Web server section 36 imports for reading the files with the requested file names from the three-dimensional map data 34, and transmits the read files to the three-dimensional-image generating section 112 (step ST11).

The three-dimensional-image generating section 112 requests transmission of these files in a certain order. More particularly, the above operation will be executed as follows : in the first place, the three-dimensional-image generating section 112 requests transmission of the ground data files 43 among the specified data files 43, 44, and 45, and then requests transmission of the building data files 44 and the point data files 45 in the order based on the importances from the highest one to the lower one.

Further, there may be another configuration in which the three-dimensional-image generating section 112 acquires the building data file 44 and the point data file 45 by requesting them in the order based on the distance from the eyepoint from the shorter one, or by requesting the files with the same importance in the order based on the distance from the eyepoint from the shorter one.

When the three-dimensional-image generating section 112 receives the requested files from Web server section 36, the section 112 saves the received files in the storage device 11 of the client PC 4, and starts generating of the three-dimensional map image seen from the position of the above-described eyepoint (step ST12).

The three-dimensional-image generating section 112, in the first place, generates the three-dimensional map image of the ground seen from the above-described eyepoint by mapping the ground texture data 81 included in the acquired ground data file 43, based on the coordinate values of these four corners.

The three-dimensional-image generating section 112 generates the three-dimensional shape data of buildings for each of buildings included in the acquired building data file 44, using received four vertices of the bottom face and received height data.

More specifically, the three-dimensional-image generating section 112, in the first place, generates polygon data of the side faces and the top face of a building on the assumption that the building has a pillar shape, using received four vertices of the bottom face and received height data. Each of the polygon data is combining data of the coordinate values of the vertices of the polygon. Moreover, the three-dimensional-image generating section 112 combines each polygon data with a predetermined side face image data or a predetermined top face image data. Moreover, the three-dimensional-image generating section 112 may use as these surface image data predetermined images which are in correspondence with each of values of attributes of a building (the type of a wide area control file, the size of the building, and the like) beforehand. Thereby, three-dimensional shape data of the buildings are generated, wherein each of the data includes a plurality of pieces of texture data.

Further, there may be another configuration in which the three-dimensional-image generating section 112 may add data on the roof shape of a building to the three-dimensional shape data of the building, based on the value of the attribute for the building (the type of the wide area control file, the size of the building, and the like), and on applications and building standards for each region according to the Building Standard Act. The roof shape of the building includes a flat roof, a pyramidal roof, a gable roof, and the like. The three-dimensional-image generating section 112, for example, may automatically add data of a pyramidal roof, a gable roof, and the like to each building in the region, where its regional attribute is 'the first kind low-rise-residential district', and automatically add data of a flat roof to each building in the region, where its regional attribute is 'the commercial district'. Thereby, the three-dimensional map image becomes a more realistic image and a user may more easily understand the image.

After generating the three-dimensional shape data of the buildings, the three-dimensional-image generating section 112 arranges the images of polygons seen from the eyepoint in the display area based on polygon data of the generated three-dimensional shape data of the buildings, and draws the buildings, which are seen from the above-described eyepoint, on the three-dimensional map image of the ground.

The three-dimensional-image generating section 112 draws display character strings of points included in the acquired point data file 45 on the three-dimensional map ground image, in the direction seen from the eyepoint in the front. Moreover, the three-dimensional-image generating section 112 draws segment lines between each of the drawn display character strings and the positions at the coordinate values of the position of the point data. Further, the above segment lines are not particularly required to be drawn.

Then, the display device 18 lays out and displays the supplied three-dimensional map image in the right display frame 121 on the display screen, based on the drawing data generated bythethree-dimensional-image generatingsection112. Thereby, the three-dimensional map image seen from the predetermined eyepoint is displayed on the client PC 4.

Moreover,the three-dimensional-image generatingsection 112 repeats steps from the requesting step for transmission of each file (step ST10) to the generating process step of the three-dimensional map image (step ST12), till the three-dimensional map image being generated using all the specified files 43, 44, and 45 (step ST14).

In the initial screen of FIG. 17, there is a three-dimensional map image being displayed, in which an area including the division 52 shown in FIG. 7 is located at a distance between the second radius and the first radius from the eyepoint. As the division 52 shown in FIG. 7 is at the distance between the second radius and the first radius; only a building (building 64 in the drawing), with its importance being the predetermined value (for example, 3) or more, and only a point (point 72 representing the name of the crossing), with its importance being the predetermined value (for example, 3) or more, are drawn in the three-dimensional map image.

Here, the three-dimensional-image generating section 112 starts and generats first three-dimensional map image, when a file is received, even before the receiving process being not completed of all the files, which are specified as essential for for displaying the map. Then, the three-dimensional-image generating section 112 generates new three-dimensional map images sequentially being added newly acquired data in received files after the first grnerating process. Thus, for example, the three-dimensional-image generatingsection112, in the first, generates and displays the three-dimensional map image of ground, and after that generates and displays new three-dimensional map images sequentially being added new buildings and new points. Even when acquisition of all the files for the map lists is not completed, the display device 18 displays the three-dimensional map images, using the data in the acquired files up to each time. In the display, the three-dimensional map image is displayed as appears to be getting completion step by step. A user may understand, based on the incomplete three-dimensional map image, that the image being generated is the image of which area and of the eyepoint.

When a certain input operation is performed on the input device 17, the operation detecting section 111 judges an input instruction in correspondence with the above operation. Then, when judging that the input operation is a predetermined operation by which the eyepoint is moved, or rotated, the operation detecting section 111 notifies by an event the input instruction to the three-dimensional-image generating section 112 (step ST13 or step ST15).

When being notified the instruction for moving or rotating the eyepoint, the three-dimensional-image generating section 112 calculates a new position of the eyepoint updated by the instruction, and starts generating a three-dimensional map image seen from the calculated position.

More particularly, the three-dimensional-image generating section 112, in the first place, judges whether the wide area control file 46 which has not been acquired is required or not, based on the new range of the field of view (step ST16) . When the wide area control file 46 which has not been acquired is judged to be required, the three-dimensional-image generating section 112 acquires the no aquired wide area control file 46 from the Web server section 36, by designating the file name of the no aquired wide area control file 46 which is a file name of the wide area control file 46 for an adjacent division in the wide area control file 46.

When all the wide area control files 46 for generating a three-dimensional map image seen from a new eyepoint are acquired, the three-dimensional-image generating section 112 specifies data files which are required for a display image corresponding to the new eyepoint (step ST9). The three-dimensional-image generating section 112 acquires files, which have not been acquired, or which have not been cached to the storage device 11 in the client PC 4 among newly specified files, from the Web server section 36, by designating the file names based on the wide area control file 46 (step ST10 and step ST11). Here, the data files acquired from the three-dimensional-map delivery server 1 are cached to the storage device 11 in the client PC 4. The three-dimensional-image generatingsection112generatesnew three-dimensionalmapimage seen from the new eyepoint, using the data in the acquired files. The display device 18 displays the three-dimensional map image which has been newly generated (step ST12).

Here, as described at step ST13, when the eyepoint is moved or rotated by the input operation on the input device 17 in a state in which the generation of the three-dimensional map image is not completed, before completing the acquisition process of specified files from the previous eyepoint, the three-dimensional-image generating section 112 specifies a file required for a new eyepoint. In such case, the three-dimensional-image generating section 112 starts acquisition process of new specified file from new eyepoint, based on the input operation on the input device 17. Thereby, the response of updating process of the three-dimensional map image to the user operation becomes better.

Moreover, as described above, when specified files are sequentially updated according to the user operation and when the files are sequentially acquired, the files of the three-dimensional map data 34 are accumulated in the storage device 11 and the like in the client PC 4 in cumulative fashion. That is, the files are cached. Thereby, for example, when the data amount of the accumulated files becomes or is going to be a predetermined data amount or more, the three-dimensional-image generating section 112 may delete the files which have been already stored. In this case, the three-dimensional-image generating section 112 may delete files from the accumulated files, for example, in the order from the earliest received file, or from a file which has not been referred for the longest time.

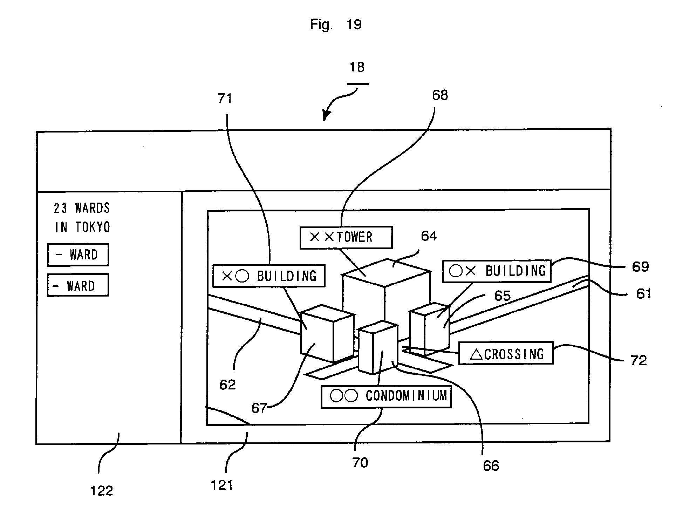

FIG. 19 is a view showing a three-dimensional map image displayed on the display screen, in which the area including the division 52 shown in FIG. 7 is seen from the eyepoint at a distance within the second radius. As the distance between the division 52 shown in FIG. 7 and the eyepoint is within the second radius, all buildings 64, 65, 66, and 67, and all points 68, 69, 70, 71, and 72 are drawn in the three-dimensional map image.

According to the above configuration, a detailed three-dimensional map is displayed in near area from the eyepoint, and only higher importance structures are displayed in far area from the eyepoint. In a three-dimensional map, a structure in closer area to the eyepoint is displayed larger, and a structure in distant area from the eyepoint is displayed smaller. When being interested in a division or a structure which is distant from a current eyepoint, the user tries to display a detailed map of the interested division or the interested structure, by moving the eyepoint to the vicinity. Considering the characteristics of the above-described three-dimensional map, it does not deteriorate user convenience even if structures, which are located at distant area from the eyepoint and which are displayed smaller in the map, are deleted according to the importances.

As described above, the above three-dimensional city information delivery system displays a three-dimensional map image on the client PC 4, using data stored in the three-dimensional-map delivery server 1. The user may operate the input device 17 of the client PC 4 to browse a three-dimensional map image in which a desired area is seen from a desired eyepoint.

Moreover, the above three-dimensional city information delivery system may transmit data efficiently for generating a three-dimensional map image from the three-dimensional-map delivery server 1 to the client PC 4 through the Internet 3, and may display the three-dimensional map image using the data on the client PC 4.

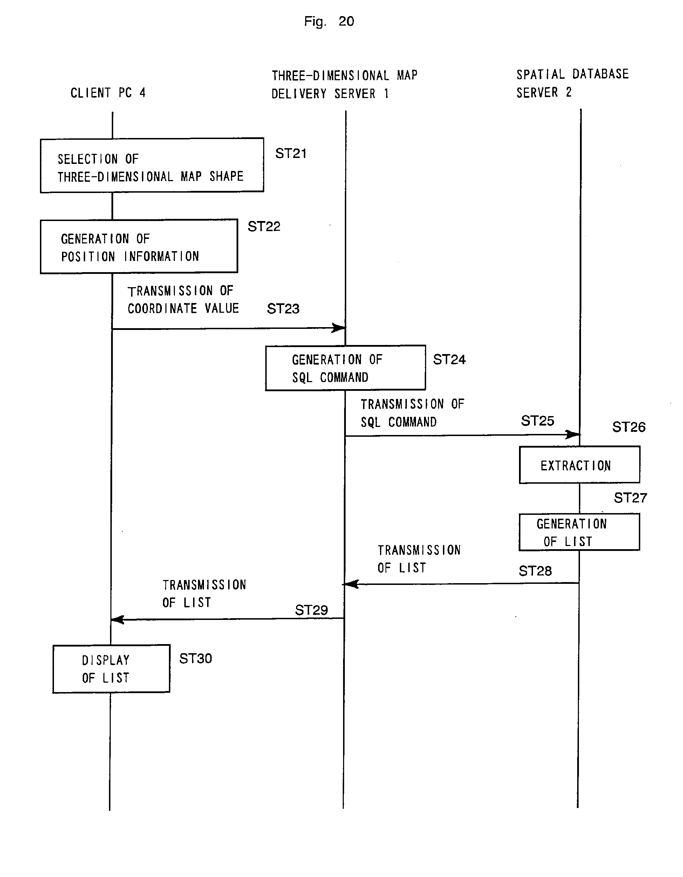

FIG. 20 is a flow chart showing display process of searched result for shops such as convenience stores in the client PC 4 of FIG. 1.

When a user operates the input device 17, and selects one of character string of a building or a point which is displayed in the three-dimensional map image, the operation detecting section 111 selects the character string (three-dimensional map shape) of the building or the point which is displayed in the three-dimensional map image, based on the selecting operation, and instructs the search to the search requesting section 113 (step ST21).

The search requesting section 113 generates position information (coordinate value) of the selected building or the selected point (step ST22). The search requesting section 113 generates the above position information, for example, using the coordinate value of the selected building or the selected point in the wide area control file 46,or using the gravity position value of the three-dimensional shape for the generated building. The position information generated by the search requesting section 113 is a coordinate value in the three-dimensional space.

The operation detecting section 111 supplies the generated coordinate value selected building or point in the three-dimensional space, to the communication interface 14 in the client PC 4. The communication interface 14 of the client PC 4 transmits the supplied coordinate value in the three-dimensional space, to the communication interface 31 in the three-dimensional-map delivery server 1 through the Internet 3 (step ST23). The communication interface 31 in the three-dimensional-map delivery server 1 supplies the received coordinate value in the three-dimensional space to the Web server section 36.

When the communication interface 31 receives the generated position value in the three-dimensional space, the Web server section 36 generates a structured query language (SQL) command (step ST24). The above SQL command is a search command for shops (shops, such as convenience stores, of user designated type) within a predetermined circle range from the received position value; and has the received position value and the type value corresponding to the convenience store as a searching condition. In that case, the Web server section 36 generates a two-dimensional coordinate value from the coordinate value in the three-dimensional space received from the client PC 4, by eliminating the height element value; and uses the generated two-dimensional coordinate value for a coordinate value in the SQL command.

After generating the SQL command, the Web server section 36 supplies the generated SQL command to the communication interface 31. The communication interface 31 in the three-dimensional-map delivery server 1 transmits the SQL command to the communication interface 101 in the spatial database server 2 through the Internet 3 (step ST25). The communication interface 101 in the spatial database server 2 supplies the received SQL command to the searching section 106.

When the searching section 106 in the spatial database server 2 receives the SQL command, the searching section 106 searches the city information data base 104 using the received SQL command, and extracts shops (in this case, convenience stores) in the range (step ST26). More particularly, for example, the searching section 106 extracts each records, which has the attribute of the convenience store and object of which is located at within a distance from the position value in the SQL command in the two dimensional distance, from the city information data base 104.

After extracting the records corresponding to the SQL command, the searching section 106 generates the list of the names of the extracted convenience stores (stepST27). Moreover, the searching section 106 corresponds each of the names of the convenience stores with each of the coordinate values in the two dimensional locations.

The searching section 106 in the spatial database server 2 supplies the generated list of the names of the convenience stores to the communication interface 101. The communication interface 101 in the spatial database server 2 transmits the list of the names of the convenience stores to the communication interface 31 in the three-dimensional map delivery server 1 through the Internet 3 (step ST28). The communication interface 31 in the three-dimensional-map delivery server 1 supplies the received list of the names of the convenience stores to the Web server section 36.

When the list of the names of the convenience stores is supplied, the Web server section 36 transmits the list of the names of the convenience stores, together with the two-dimensional coordinate values of each of convenience stores, to the search requesting section 113 in the client PC 4 through the communication interface 31, the Internet 3, and the communication interface 14 in the client PC 4 (step ST29). The search requesting section 113 outputs the received list to the display device 18. The display device 18 displays the list of the names of the convenience stores on the left display frame 122 in the display screen (step ST30).

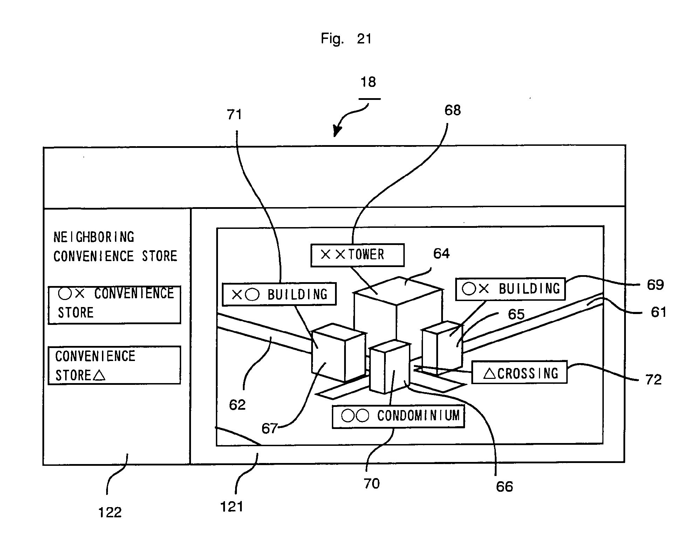

FIG. 21 is a view showing an image on the display screen, wherein the image is displayed when a character string "×○ building" is selected in the three-dimensional map image in FIG. 19. The list of the names ("o× convenience store" and "Convenience store Δ") of the convenience stores in the range of the two-dimensional space from the coordinate value of the selected position of "xo building" is displayed in the left display frame 122 on the display screen. The three-dimensional map image remains being displayed in the right display frame 121 on the display screen.

Then, for example, when a user executes predetermined operation, the search requesting section 113 selects one name from the list of the names of the convenience stores, based on an instruction from the operation detecting section 111. The search requesting section 113 supplies the value of the three-dimensional position to the three-dimensional-image generating section 112, wherein the three-dimensional position value is obtained by adding "0 meter" as the height value to the two-dimensional space coordinate value. The three-dimensional-image generating section 112 moves the eyepoint in such a way that the intersecting point, between the center of the field of view and the ground, becomes the three-dimensional coordinate value supplied from the search requesting section 113; and generates a three-dimensional map image seen from the moved eyepoint. The display device 18 displays the generated three-dimensional map image.

As described above, the above three-dimensional city information delivery system searches the spatial database server 2 for convenience stores, which are in the vicinity of a selected building or a selected point in the three-dimensional map image in the client PC 4; and displays the search result on the client PC 4. Moreover, when the name of one convenience store is selected from the search result list of the names of the convenience stores, the three-dimensional map image is updated in such a way that the position of the convenience store is the center of the display frame. The user may obtain information of buildings and the like in the displayed three-dimensional map image, by operating the input device 17 in the client PC 4.

Though the above-described embodiment is an example of a preferable embodiment according to the present invention, the present invention is not limited thereto, and various kinds of changes and modifications may be realized.

For example, the three-dimensional city information delivery system according to the present embodiment has and uses one ground image for the ground image of each division 52. In addition to the above configuration, there may be another configuration, for example, in which a plurality of ground images withdifferentresolutions (dataamounts) are prepared; one image is selected from the plurality of ground images with different resolutions according to the distances between an eyepoint and each grounds; and the selected image is used for a ground image of each division. There may be a configuration, for example, in which a ground image with a low resolution is used when the distance from an eyepoint to its ground is long, and a ground image with a high resolution is used when the distance from an eyepoint to its ground is short. Thereby, even when the distance between an eyepoint and a ground is long, the total data amount of the ground data which is transmitted for generating a three-dimensional map image may be controlled to the same data amount as that of in the short distance.

According to the present embodiment, the three-dimensional city information delivery system uses for the ground image, images based on aerial photographs or images based on vector data. In addition to the above configuration, for example, an image obtained by superimposing an image based on an aerial photograph on an image based on vector data may be used for the ground image. A two-dimensional polygon image data of translucent color may be used instead of the superimposed vector image data. This enable to obtaine a clear and good viewability of a ground image with the ground boundary easily distinguished, with using a low resolution aerial photograph image. By reducing the resolution of the image based on an aerial photograph, an amount of data in one transferring operation for generating a three-dimensional map image may be reduced.

Moreover, an amount of data to be transferredmay be further reduced, without deteriorating the viewability, by using an image with a small number of colors, for example, a monochrome image as an image based on an aerial photograph. The amount of data of a monochrome ground image is approximately one third of the data amount for a full-colored ground image. In addition, by changing the color of the monochrome image according to, for example, the seasons, the time zones, and the like, in an generated image there may have the keen sense of the seasons.

Moreover, as an image of each ground, a ground image generated from contoured ground data may be used, instead of a flat ground image like an aerial photograph based image.

The three-dimensional city information delivery system according to the present embodiment displays a general three-dimensional map image. But, in addition to this configuration, there may be another configuration in which map image for sightseeing, a map image of protection of disaster, a map image for commerce, and a map image as real estate information may be displayed. When an map image with a specific object is displayed as described above, for example, an image of texture data to be pasted on a building may be changed according to the information, or the height of a building may be increased or decreased according to the information. More particularly, for example, the color of a building may be changed into, for example, red, blue, and green according to degrees of risk in a map image for disaster prevention, based on information on disaster prevention levels for each region. A user may effectively understand the above additional information, by the better visual effect.

Moreover, the color and the size of each of points displayed based on point data may be changed according to the distance from an eyepoint and the like. For example, there may be a configuration in which the displayed size of each points is gradually decreased according to each distances from an eyepoint , or the vividness degree of colors or the brightness degree of colors of each points is gradually reduced according to each distances from the eyepoint. Thereby, the viewability of points located relatively close to an eyepoint may be improved.

The three-dimensional city information delivery system according to the present embodiment has displayed a three-dimensional map image like a bird's-eye view, but, in addition to the above configuration, for example, a three-dimensional image for a row of stores and houses seen at a height of one's eyes, and the like may be displayed. When the three-dimensional image for a row of stores and houses seen at a height of one's eyes is displaced, roadside trees may be generated by a configuration in which, for example, an image of one tree is registered as point data, and the tree is arranged face to face with the position of an eyepoint. Especially, by adding the above data to the three-dimensional city information delivery system according to the present embodiment, the one system may provide the three-dimensional map image like a bird's-eye view and provide the three-dimensional map image for a row of stores and houses seen at a height of one's eyes.

In the three-dimensional city information delivery system according to the present embodiment, the wide area control files 46 for each division have been stored as three-dimensional map data beforehand. In addition to the above configuration, there may be another configuration, for example, in which the three-dimensional-map delivery server 1 dynamically generates a suitable wide area control file, responding to a request, and transmits the generated file to the client PC 4.

The three-dimensional city information delivery system according to the present embodiment has displayed a convenience store after searching for the convenience store in the vicinity of a selected building or a selected point, but an item other than the convenience store may be searched and displayed. In this case, there may be a configuration, for example, in which, when a building or a point is selected, searching items such as a convenience store and a station are displayed, and searching is performed with the selection within the the above items.

The three-dimensional city information delivery system according to the present embodiment has had a configuration in which the whole of one city information data base 104 is searched using an SQL command, including a coordinate value and a type of a position. In addition to the above configuration, there may be another configuration, for example, in which a plurality of data bases, which are obtained by dividing the city information data base 104 are provided. In this case, especially, searching for information on the vicinity of a selected building or a selected point may be completed in a shorter time in comparison with a case in which the whole of the city information data base 104 as one integrated data base is searched. Because data in the three-dimensional map data 34 is divided into a plurality of data bases in correspondence with each division 52 as an administrative unit for the data in the map data 34, and information on the division 52 is added to an SQL command to enable searching of each division 52 as a unit.

According to the above-described embodiment, the three-dimensional-map delivery server 1 generates an SQL command, and the spatial database server 2 searches the city information data base 104 using the SQL command. In addition to the above configuration, there may be a configuration, for example, in which the three-dimensional-map delivery server 1 generates other data-base searching commands, and other searching commands. Then, when the spatial database server 2 receives the other data base searching command, searching may be performed using the other data base searching command. Moreover, the spatial database server 2 may be searched for information (for example, files) on the Internet, on a local area network (LAN), or on a local machine and the like, using the other searching commands.

The three-dimensional city information delivery system according to the present embodiment has transmitted the three-dimensional map data 34 from the three-dimensional-map delivery server 1 to the client PC 4; and the client PC 4 generates ground images in correspondence with an eyepoint, and the like
In addition to the above configuration, there may be anther configuration, for example, in which a ground image in correspondence with an eyepoint is generated in the three-dimensional-map delivery server 1, and the generated image is transmitted to the client PC 4 for displaying.

Especially, when a ground image corresponding to an eyepoint is generated in the three-dimensional-map delivery server 1, it is preferable that the generated ground image which is generated using a two-dimensional map image as an original map becomes an image with an information amount corresponding to the distance of the ground. That is, when the image in the two-dimension vector map is used as an original map, a comparably detailed image to that of the two-dimensional vector map is obtained for a ground closer to the eyepoint, and an image rougher than that of the two-dimensional vector map is obtained for a ground distant from the eyepoint.

When the two-dimensional vector map uses a plurality of layers, the three-dimensional-map delivery server 1 may generate a ground image corresponding to an eyepoint in the layer unit, and the client PC 4 may generate a ground image by superimposing ground images in layers in the superimposing order.

Moreover, when bump mapping processing (height mapping processing) is performed in the two-dimensional vector map, the three-dimensional-map delivery server 1 may cut out a grayscale image for height information, which is used for bump mapping, corresponding to an eyepoint, and may transmit the image to the client PC 4, or may transmit a grayscale image within a predetermined range to the client PC 4 beforehand, and the image may be cut out for use corresponding to the eyepoint in the client PC 4. Especially, by enabling the two transmitting methods, the display efficiency in each of the client PCs 4 is improved, and the three-dimensional map image may be efficiently displayed on each of the client PCs 4.

The present embodiment has had a configuration in which buildings and points are drawn on the ground image in the three-dimensional map image. In addition to the above configuration, there may be a configuration, for example, in which structures such as rivers and roads are drawn on the ground image.

According to the above-described embodiment, the three-dimensional-map delivery server 1, the spatial database server 2 and the client PC 4 are connected to each other through the Internet 3. But there may be another configuration in which the above three components are connected to each other through another computer network such as a LAN.

According to the above-described embodiment, the building data file 44 has four pieces of vertex data for the bottom face in each building data. In addition to the above configuration, there may be another configuration, for example, in which the building data file 44 has three, or five or more pieces of vertex data as vertex data for the bottom face in each building data. Thereby, shape data same as the shape of abuildingmaybe generated for the building with the bottom face which has not a rectangular shape. For example, when there are six pieces of vertex data as vertex data of the bottom face in building data, shape data for a hexagonal building may be generated, based on the six pieces of vertex data to be stored.

### Industrial Applicability

The three-dimensional-map distribution server device, the client terminal device, and the three-dimensional-map distribution system according to the present invention may be preferably used for a case in which data in the three-dimensional map image is delivered and displayed through a network.

## Claims

1. A three-dimensional-map distribution server device, comprising:
a storage unit which stores a plurality of structure shape data drawn on a ground to generate a three-dimensional map image;
a server communication unit connected to a network;
a list transmitting unit which transmits through the server communication unit a list, which includs a plurality of structure shape data within a district and position information of the district or of the structures; and
a data transmitting unit which, when the server communication unit receives a transmission request for the structure shape data selected based on the position information in the list, transmits requested structure shape data in the storage unit through the server communication unit.

2. The three-dimensional-map distribution server device according to claim 1, wherein
the storage unit which stores the plurality of structure shape data in plural of files, each of which has data of a group classified according to the sizes, the heights, or the types of the structures, and
the data transmitting unit which transmits the requested structure shape data by the file unit.

3. The three-dimensional-map distribution server device according to claim 1 or 2, wherein
the list of structure shape data includes plural of display control data, each of which is in correspondence with each of the structure shape data, and by each of which it is switched whether the correspondent structure are displayed or not based on the structure shape data according to predetermined conditions.

4. The three-dimensional-map distribution server device according to claim 3, wherein
each of the display control data is priority data, by which it is controlled whether displaying is performed or not, and has a value corresponding to the sizes, the heights or the types of each of the structure.

5. The three-dimensional-map distribution server device according to any one of claims 1 through 4, wherein
the storage unit stores as each of structure shape data, the vertex data of the bottom face and the height data of each of the structure.

6. The three-dimensional-map distribution server device according to any one of claims 1 through 5, wherein
the server communication unit which receives a transmission request with eyepoint information or the list, which is required for generating the three-dimensional map image, and
the list transmitting unit which, responding to the received transmission request with eyepoint information or the list, transmits requested lists of limited region within the requested range.

7. The three-dimensional-map distribution server device according to any one of claims 1 through 6, comprising:
a searching command generating unit which, when the server communication unit receives a three-dimensional position information of a point, which is in correspondence with a three-dimensional position information of a selected structure or a three-dimensional position information of a selected point in the three-dimensional map image and has display information of the related point, generates a searching command in which the received three-dimensional position information is converted into a two-dimensional position information; and
a searched-result transmitting unit which generates display data for displaying information, which is stored in correspondence with two-dimensional position information, and the position of which is within a predetermined range from the two-dimensional position information in the searching command, and transmits the display data through the server communication unit.

8. A three-dimensional-map distribution server device, comprising:
a storage unit which stores a plurality of point data, each of which is in correspondence with a point in a three-dimensional map image, and each of which has display information of the related point;
a server communication unit connected to a network;
a list transmitting unit which transmits through the server communication unit a list, which includes a plural of point data within a district and position information of the district or of the points; and
a data transmitting unit which, when the server communication unit receives a transmission request for the point data selected based on the position information in the list, transmits requested point data in the storage unit through the server communication unit.

9. A client terminal device, comprising:
a client communication unit connected to a network;
a list receiving unit which receives a list, which includes a plurality of structure shape data within a district drawn on a ground to generate a three-dimensional map image, and has position information of the district or of structures, through the client communication unit;
a data receiving unit which transmits a transmission request for the structure shape data within a range of a predetermined distance from the eyepoint, where the structure selected based on eyepoint information to generate a three-dimensional map image and on position information in the list, through the client communication unit, and receives the requested structure shape data, through the client communication unit;
an image data generating unit which generates a three-dimensional map image data within a field of view from the eyepoint toward the ground at a angle, using the structure shape data received based on the transmission request; and
a display unit which displays a three-dimensional map image, based on the data generated by the image data generating unit.

10. The client terminal device according to claim 9, wherein
the list of the structure shape data includes file names of files, each of which has data of a group classified according to the sizes, the heights, or the types of the structures, and
the data receiving unit designates the file name in a transmission request for the shape data, and receives the requested structure shape data by the file unit.

11. The client terminal device according to claim 9 or 10, wherein
the list of structure shape data includes plural of display control data, each of which is in correspondence with each of the structure shape data, and by each of which it is switched whether the correspondent structure are displayed or not based on the structure shape data according to predetermined conditions, and
the data receiving unit transmits a transmission request only for the structure shape data, which is located within a range of a predetermined distance from the eyepoint, and which meets requirements for the distance from the eyepoint and the display control data.

12. The client terminal device according to any one of claims 9 through 11, comprising:
a selecting unit which selects a point in the three-dimensional map image displayed in the display unit, from the points each of which is in correspondence with a structure or a location within the three-dimensional map image and has display information of the related point; and
a search instructing unit which transmits an searching instruction for vicinity information of the selected structures or points, which includes position information of the selected structure or point, through the client communication unit, wherein
the display unit which displays the searched result, which is received through the client communication unit based on the searching instruction, together with the three-dimensional map image.

13. A client terminal device, comprising:
a client communication unit connected to a network;
a list receiving unit which receives a list, which includes a plurality of point data, each of which is in correspondence with each of locations, within a district and drawn for display information on a ground to generate a three-dimensional map image, and has position information of the district or of points, through the client communication unit;
a data receiving unit which transmits a transmission request for the point data within a range of a predetermined distance from the eyepoint, where the point selected based on eyepoint information to generate a three-dimensional map image and on position information in the list, through the client communication unit, and receives the requested point data, through the client communication unit;
an image data generating unit which generates a three-dimensional map image data within a field of view from the eyepoint toward the ground at a angle, using the point data received based on the transmission request; and
a display unit which displays a three-dimensional map image, based on the data generated by the image data generating unit.

14. A three-dimensional map distribution system, comprising:
the three-dimensional map distribution server device according to any one of claims 1 through 7, which is connected to a network; and
the client terminal device according to any one of claims 9 through 12, which is connected to the network.
